# EUROPEAN PATENT APPLICATION

(11) **EP 0 685 536 A1**
(43) Date of publication of application: **06.12.1995**
(21) Application number: 95902304.5
(22) Date of filing: 05.12.1994
(51) Int. Cl.: C09D 11/00

(54) **INK COMPOSITION FOR INK JET RECORDING**

(30) Priority: 06.12.1993 JP 305545/93
(71) Applicant: SEIKO EPSON CORPORATION, Shinjuku-ku Tokyo 160 (JP)
(72) Inventor: SANO, Yukari, Suwa-shi, Nagano 392 (JP); TAKATSUNA, Junko, Suwa-shi, Nagano 392 (JP); TAKEMOTO, Kiyohiko, Suwa-shi, Nagano 392 (JP)
(74) Representative: Grünecker, Kinkeldey, Stockmair & Schwanhäusser Anwaltssozietät
(86) International application number: JP9402041
(87) International publication number: WO9516002

(57) **Abstract**

An ink composition for ink jet recording which can well satisfy various characteristics required, such as freeness from uneven printing, high storage stability, prevention of clogging of ink delivery nozzle, excellent delivery stability, and high print density. The composition comprises pigment, dispersant, aqueous medium, 2-pyrrolidone, and resin emulsion soluble in 2-pyrrolidone.

## Description

### BACKGROUND OF THE INVENTION

### Field of the Invention

The present invention relates to an ink composition, using a pigment as a colorant, for ink jet recording.

### Background Art

As an ink composition for ink jet recording, various aqueous ink compositions comprising a dye as a colorant and an aqueous medium have been put to practical use. These aqueous ink compositions, however, have poor light fastness and water resistance of the print due to the nature of the dye as the colorant. For this reason, an ink composition using a pigment as a colorant has been proposed in the art.

The pigment, however, is basically insoluble in an aqueous solvent and an organic solvent. Therefore, in an ink composition using a pigment as a colorant, the pigment should be finely dispersed in a stable state. Further, the ink composition using a pigment should have properties generally required of an ink composition for ink jet recording. For example:
(1) the ink composition should have properties such as viscosity, surface tension, and electric conductivity which is compatible with ejecting conditions such as driving voltage and driving frequency, the shape and material of an ejecting orifice, and the diameter of an ejecting orifice;
(2) the ink composition should have stability which is high enough to withstand Storage for a long period of time and does not cause precipitation causative of clogging of a nozzle;
(3) the ink composition should be rapidly and surely fixed onto a recording medium (such as paper or OHP) and, at the same time, can provide a print with print dots having a smooth outline and little or no bleeding;
(4) the resultant image should have a sharp color tone and a high density; and
(5) the resultant image should have excellent water resistance and light fastness.

Further, it is known that, unlike the conventional ink composition containing a dye, the ink composition containing a pigment provides ununiform printing. The ununiform printing seems to be attributable to the localization of pigment particles on a recording medium. The ununiform printing is therefore observed significantly on a solid portion such as graphics rather than letters.

For example, Japanese Patent Laid-Open No. 147859/1981 discloses an ink composition, using a pigment, with N-methyl-2-pyrrolidone being added thereto. However, ink compositions having better properties have been still desired in the art.

### SUMMARY OF THE INVENTION

Accordingly, an object of the present invention is to provide an ink composition having an excellent properties for ink jet recording.

In particular, an object of the present invention to provide an ink composition which is less likely to cause an unfavorable phenomenon inherent in the conventional ink composition containing a pigment, i.e., ununiform printing.

The present inventors have now found that the above object can be attained by an ink composition, using a pigment, with 2-pyrrolidone and a particular resin emulsion being added thereto.

Therefore, the ink composition for ink jet recording according to the present invention comprises a pigment, a dispersant, an aqueous medium, 2-pyrrolidone, and a resin emulsion soluble in the 2-pyrrolidone.

### DETAILED DESCRIPTION OF THE INVENTION

### 2-Pyrrolidone and resin emulsion soluble therein

The ink composition according to the present invention comprises 2-pyrrolidone and a resin emulsion soluble in the 2-pyrrolidone.

In the present invention, the resin emulsion "soluble" in the 2-pyrrolidone is defined as follows. Firstly, a composition is prepared by mixing together the ingredients for constituting the ink composition of the present invention except for the pigment and the 2-pyrrolidone. With the composition thus prepared, a water-repellent flat plate, such as glass or plastic, is spotted. After the spot is dried at room temperature for 24 hr, 2-pyrrolidone is dropped onto the solidified spot. When this resulted in the flow of the spot, the resin emulsion is judged to be "soluble" in the 2-pyrrolidone.

The resin emulsion added to the ink composition of the present invention is intended to mean an emulsion comprising water as a continuous phase and the following resin component as a dispersed phase. Examples of the resin component as the dispersed phase include an acrylic resin, a vinyl acetate resin, a styrene/butadiene resin, a vinyl chloride resin, an acrylic/styrene resin, a butadiene resin, and a styrene resin.

According to a preferred embodiment of the present invention, the resin is preferably a polymer comprising a combination of a hydrophilic segment with a hydrophobic segment. The particle diameter of the resin component is not particularly limited so far as an emulsion can be formed. It, however, is preferably not more than about 150 nm, still preferably in the range of from about 5 to 100 nm.

The resin emulsion can be prepared by mixing resin particles, optionally together with a surfactant, into water. For example, an acrylic resin or styrene/acrylic resin emulsion can be prepared by mixing a (meth)acrylic ester or styrene and a (meth)acrylic ester, optionally together with (meth)acrylic acid and a surfactant, into water. In general, the mixing ratio of the resin component to the surfactant is preferably about 10 : 1 to 5 : 1. When the amount of the surfactant used is less than the above amount range, it is difficult to form an emulsion. On the other hand, when it exceeds the above amount range, there is a tendency that the water resistance or penetration of the ink is unfavorably deteriorated. The surfactant is not particularly limited, and preferred examples thereof include anionic surfactants (for example, sodium dodecylbenzenesulfonate, sodium lauryl phosphate, and an ammonium salt of a polyoxyethylene alkyl ether sulfate) and nonionic surfactants (for example, a polyoxyethylene alkyl ether, a polyoxyethylene alkyl ester, a polyoxyethylene sorbitan fatty acid ester, a polyoxyethylene alkyl phenyl ether, a polyoxyethylene alkylamine, and a polyoxyethylene alkylamide). They may be used alone or as a mixture of two or more.

The proportions of the resin as the dispersed phase component and water are such that the amount of water is in the range of from 60 to 400 parts by weight, preferably 100 to 200 parts by weight, based on 100 parts by weight of the resin.

Known resin emulsions may also be used as the resin emulsion. For example, resin emulsions described in Japanese Patent Publication No. 1426/1987 and Japanese Patent Laid-Open Nos. 56573/1991, 79678/1991, 160068/1991, and 18462/1992, as such, may be used.

It is also possible to utilize commercially available resin emulsions, and examples of such emulsions include Microgel E-1002, E-2002, and E-5002 (styrene/acrylic resin emulsions, manufactured by Nippon Paint Co., Ltd.), Voncoat 4001 (an acrylic resin emulsion, manufactured by Dainippon Ink and Chemicals, Inc.), Voncoat 5454 (a styrene/acrylic resin emulsion, manufactured by Dainippon Ink and Chemicals, Inc.), SAE 1014 (a styrene/acrylic resin emulsion, manufactured by Nippon Zeon Co., Ltd.), Saivinol SK-200 (an acrylic resin emulsion, manufactured by Saiden Chemical Industry Co., Ltd.), Nanocryl SBCX-2821 (a silicone-modified acrylic resin emulsion, manufactured by Toyo Ink Manufacturing Co., Ltd.), Nanocryl SBCX-3689 (a silicone-modified acrylic resin emulsion, manufactured by Toyo Ink Manufacturing Co., Ltd.), #3070 (a methyl methacrylate polymer resin emulsion, manufactured by Mikuni Color Ltd.), SG-60 (a styrene/acrylic resin emulsion, manufactured by Gifu Ceramic Seizosho Co., Ltd.), and Grandoll PP-1000 (a styrene/acrylic resin emulsion, manufactured by Dainippon Ink and Chemicals, Inc.).

The content of the 2-pyrrolidone in the ink composition is preferably about 0.3 to 10% by weight, still preferably about 1 to 5% by weight.

The content of the resin emulsion in the ink composition is preferably about 0.1 to 5% by weight, still preferably about 0.3 to 3% by weight.

The content ratio of the 2-pyrrolidone to the resin emulsion is preferably in the range of from 1 : 0.1 to 1 : 3, still preferably in the range of from 1 : 0.3 to 1 : 1.5.

### Pigment

Inorganic pigments and organic pigments may be used as the pigment in the ink composition according to the present invention without particular limitation.

Examples of the inorganic pigment include, in addition to titanium oxide and iron oxide, carbon black produced by known processes such as contact process, furnace process, and thermal process. Examples of the organic pigment include azo pigments (including azo lakes, insoluble azo pigments, condensed azo pigments, and chelate azo pigments), polycyclic pigments (for example, phthalocyanine pigments, perylene pigments, perinone pigments, anthraquinone pigments, quinacridone pigments, dioxazine pigments, thioindigo pigments, isoindolinone pigments, and quinophthalone pigments), dye chelates (for example, basic dye type chelates and acid dye type chelates), nitro pigments, nitroso pigments, and aniline black.

According to a preferred embodiment of the present invention, among these pigments, those having good affinity for water are preferably used.

The particle diameter of the pigment is preferably not more than 10 µm, still preferably not more than 0.1 µm.

The content of the pigment as the colorant in the ink composition is preferably about 0.5 to 25% by weight, still preferably 2 to 15% by weight.

### Dispersant

In the present invention, the pigment is preferably added, to the ink composition, in the form of a pigment dispersion prepared by dispersing a pigment in a solvent with the aid of a dispersant. Preferred dispersants include known dispersants used in the preparation of known pigment dispersions, for example, polymer dispersants and surfactants.

Preferred examples of the polymer dispersant include naturally occurring polymers, and examples thereof include proteins such as glue, gelatin, casein, and albumin; naturally occurring rubbers such as gum arabic and tragacanth gum; glucosides such as saponin; alginic acid and alginic acid derivatives such as a propylene glycol ester of alginic acid, triethanolamine alginate, and ammonium alginate; and cellulose derivatives such as methyl cellulose, carboxymethyl cellulose, hydroxyethyl cellulose, and ethylhydroxyethyl cellulose.

Further preferred examples of the polymer dispersant include synthetic polymers including polyvinyl alcohols; polyvinyl pyrrolidones; acrylic resins such as polyacrylic acid, polymethacrylic acid, a copolymer of acrylic acid with acrylonitrile, a copolymer of potassium acrylate with acrylonitrile, a copolymer of vinyl acetate with an acrylic ester, and a copolymer of acrylic acid with an alkyl ester of acrylic acid; styrene/acrylic acid resins such as a copolymer of styrene with acrylic acid, a copolymer of styrene with methacrylic acid, a copolymer of styrene with acrylic acid and an alkyl ester of acrylic acid, a copolymer of styrene with methacrylic acid and an alkyl ester of acrylic acid, a copolymer of styrene with α-methylstyrene and acrylic acid, a copolymer of styrene with α-methylstyrene, acrylic acid and an alkyl ester of acrylic acid; a copolymer of styrene with maleic acid; a copolymer of styrene with maleic anhydride; a copolymer of vinylnaphthalene with acrylic acid; a copolymer of vinylnaphthalene with maleic acid; and vinyl acetate copolymers such as a copolymer of vinyl acetate with ethylene, a copolymer of vinyl acetate with fatty acid vinylethylene, a copolymer of vinyl acetate with a maleic ester, a copolymer of vinyl acetate with crotonic acid, and a copolymer of vinyl acetate with acrylic acid; and salts of the above polymers. Among them, a copolymer of a monomer having a hydrophobic group with a monomer having a hydrophilic group and a polymer of a monomer having a combination of a hydrophobic group with a hydrophilic group are particularly preferred. Example of the above salt include diethylamine, ammonium, ethylamine, triethylamine, propylamine, isopropylamine, dipropylamine, butylamine, isobutylamine, triethanolamine, diethanolamine, aminomethyl propanol, and morpholine salts. A water-soluble resin soluble in a solution of an amine or other bases in water is particularly preferred. The weight average molecular weight of the above copolymer is preferably 3,000 to 50,000, still preferably 5,000 to 30,000, still more preferably 7,000 to 15,000.

Examples of surfactants preferable as the dispersant include anionic surfactants such as a salt of a fatty acid, a salt of a higher alkyldicarboxylic acid, a salt of a higher alcohol sulfuric ester, a salt of a higher alkylsulfonic acid, a condensate of a higher fatty acid with an amino acid, a salt of a sulfosuccinic ester, a salt of naphthenic acid, a salt of a liquid fatty oil sulfuric ester, and a salt of an alkylallylsulfonic acid; cationic surfactants such as a fatty acid amine salt, a quaternary ammonium salt, a sulfonium salt, and a phosphonium salt; and nonionic surfactants such as a polyoxyethylene alkyl ether, a polyoxyethylene alkyl ester, a sorbitan alkyl ester, and a polyoxyethylene sorbitan alkyl ester.

The above resin emulsion is considered to serve also as a dispersant. Therefore, the resin emulsion may be added both as the resin emulsion and the dispersant without adding any special dispersant.

For the amount of the dispersant added, the pigment : dispersant ratio is preferably in the range of from 1 : 0.06 to 1 : 3, still preferably in the range of from 1 : 0.125 to 1 : 3.

### Aqueous medium

Examples of the aqueous medium added in the present invention include monohydric alcohols such as methanol, ethanol, n-propanol, iso-propanol, n-butanol, sec-butanol, tert-butanol, iso-butanol, and n-pentanol; polyhydric alcohols such as diethylene glycol, polyethylene glycol, polypropylene glycol, ethylene glycol, propylene glycol, butylene glycol, triethylene glycol, 1,2,6-hexanetriol, thioglycol, hexylene glycol, and glycerin; ethers such as ethylene glycol monomethyl ether, ethylene glycol monoethyl ether, diethylene glycol monomethyl ether, diethylene glycol monoethyl ether, triethylene glycol monomethyl ether, and triethylene glycol monoethyl ether; and urea, N-methyl-2-pyrrolidone, and 1,3-dimethyl-2-imidazolidinone. Among them, monohydric alcohols are preferred.

The amount of the aqueous medium is suitably in the range of from 0.5 to 40% by weight, preferably in the range of from 2 to 20% by weight.

### Ink composition

The ink composition of the present invention comprises the above ingredients. If necessary, suitable additives may be added to the ink composition of the present invention for the purpose of improving various properties of the ink composition. Specific examples of the additive include viscosity modifiers, surface tension modifiers, pH adjusters, fungicides, and preservatives.

Further, if necessary, it is also possible to add saccharides such as sucrose and maltitol.

The ink of the present invention can be produced by dispersing and mixing the above ingredients together by a suitable method. For example, it is preferred to use the following method. All the ingredients except for an organic solvent and a volatile ingredient are mixed together by means of a suitable disperser (for example, a ball mill, a sand mill, an attritor, a roll mill, an agitator mill, a henschel mixer, a colloid mill, a supersonic homogenizer, a jet mill, or an Ang mill) to prepare a homogeneous mixture. Then, the organic solvent and the volatile ingredient are added to the composition. Thereafter, the composition is filtered, preferably under reduced pressure or superatmospheric pressure using a metallic filter or a membrane filter, or centrifuged to remove coarse particles and deposits causative of clogging.

### Examples

The present invention will now be described in more detail, though it is not limited to these examples only.

In the examples, all values are weight percentages.

### Example 1

| Ingredients | Ratio |
|---|---|
| Carbon black | |
| (Raven 1080, manufactured by Columbian Carbon Co., Ltd.) | 5 |
| Ammonium salt of styrene/acrylic acid copolymer (dispersant) | 1 |
| Nanocryl SBCX-2821 (silicone-modified acrylic resin emulsion having resin content on solid basis of 30%, manufactured by Toyo Ink Manufacturing Co., Ltd.) | 5 |
| 2-Pyrrolidone | 1 |
| Maltitol | 7 |
| Urea | 10 |
| Ion-exchanged water | Balance |

The above ingredients were mixed together and stirred in a jet mill. Observation under a microscope revealed that the diameter of particles in the composition became not more than 1 µm. The mixture was filtered through a 3-µm membrane filter to remove deposits and coarse particles, thereby preparing an ink composition.

In the ink composition, the 2-pyrrolidone : resin emulsion was 1 : 1.5.

Ink compositions of the following examples were prepared in substantially the same manner as in Example 1.

### Example 2

| Ingredients | Ratio |
|---|---|
| Carbon black (MA7, manufactured by Mitsubishi Kasei Corp.) | 6 |
| Ammonium salt of styrene/acrylic acid copolymer (dispersant) | 1.2 |
| #3070 (methyl methacrylate polymer resin emulsion having resin content on dry basis of 40%, manufactured by Mikuni Color Ltd.) | 3.75 |
| 2-Pyrrolidone | 3 |
| Urea | 10 |
| Ion-exchanged water | Balance |

In the ink composition, the 2-pyrrolidone : resin emulsion was 1 : 0.5.

### Example 3

| Ingredients | Ratio |
|---|---|
| Copper phthalocyanine blue | 8 |
| Salt formed by neutralizing styrene/maleic anhydride copolymer with triethanolamine (dispersant) | 1.6 |
| Nanocryl SBCX-3689 (silicone-modified acrylic resin emulsion having resin content on solid basis of 35%, manufactured by Toyo Ink Manufacturing Co., Ltd.) | 4.3 |
| 2-Pyrrolidone | 5 |
| Urea | 5 |
| Diethylene glycol | 5 |
| Ethanol | 3 |
| Ion-exchanged water | Balance |

In the ink composition, the 2-pyrrolidone : resin emulsion was 1 : 0.3.

### Example 4

| Ingredients | Ratio |
|---|---|
| Carbon black (MA7) | 6 |
| Ammonium salt of styrene/acrylic acid copolymer (dispersant) | 1.2 |
| #3070 | 0.75 |
| 2-Pyrrolidone | 3 |
| Urea | 10 |
| Ion-exchanged water | Balance |

In the ink composition, the 2-pyrrolidone : resin emulsion was 1 : 0.1.

### Example 5

| Ingredients | Ratio |
|---|---|
| Carbon black (Raven 1080) Ammonium salt of styrene/acrylic | 5 |
| acid copolymer (dispersant) | 1 |
| Nanocryl SBCX-2821 | 10 |
| 2-Pyrrolidone | 1 |
| Maltitol | 7 |
| Urea | 10 |
| Ion-exchanged water | Balance |

In the ink composition, the 2-pyrrolidone : resin emulsion was 1 : 3.

### Example 6

| Ingredients | Ratio |
|---|---|
| Carbon black (FW200, manufactured by Degussa) | 5 |
| Ammonium salt of styrene/acrylic acid copolymer (dispersant) | 1 |
| SG-60 (styrene/acrylic resin emulsion having resin content of 41%, manufactured by Gifu Ceramic Seizosho Co., Ltd.) | 3.6 |
| 2-Pyrrolidone | 1 |
| Glycerin | 5 |
| Maltitol | 7 |
| Diethylene glycol | 2 |
| Ion-exchanged water | Balance |

In the ink composition, the 2-pyrrolidone : resin emulsion was 1 : 1.5.

### Example 7

| Ingredients | Ratio |
|---|---|
| Carbon black (Raven 1080) | 4 |
| Ammonium salt of styrene/acrylic acid copolymer (dispersant) | 0.8 |
| Grandoll PP-1000 (styrene/acrylic resin emulsion having resin content of 45%, manufactured by Dainippon Ink and Chemicals, Inc.) | 2.0 |
| 2-Pyrrolidone | 2 |
| Maltitol | 3 |
| Diethylene glycol | 12 |
| Ion-exchanged water | Balance |

In the ink composition, the 2-pyrrolidone : resin emulsion was 1 : 0.45.

### Example 8

| Ingredients | Ratio |
|---|---|
| Carbon black (MA100, manufactured by Mitsubishi Kasei Corp.) | 5 |
| Ammonium salt of styrene/acrylic acid copolymer (dispersant) | 1 |
| E-2002 (methyl methacrylate polymer resin emulsion having resin content on solid basis of 33%, manufactured by Nippon Paint Co., Ltd.) | 7.2 |
| 2-Pyrrolidone | 3 |
| Glycerin | 10 |
| Maltitol | 7 |
| Ethanol | 3 |
| Ion-exchanged water | Balance |

In the ink composition, the 2-pyrrolidone : resin emulsion was 1 : 0.8.

Ink compositions of the following comparative examples were prepared in substantially the same manner as in Example 1.

### Comparative Example 1

| Ingredients | Ratio |
|---|---|
| Carbon black (MA7) | 6 |
| Ammonium salt of styrene/acrylic acid copolymer (dispersant) | 1.2 |
| #3070 | 3.75 |
| Urea | 10 |
| Ethanol | 4 |
| Ion-exchanged water | Balance |

### Comparative Example 2

| Ingredients | Ratio |
|---|---|
| Carbon black (Raven 1080) | 5 |
| Ammonium salt of styrene/acrylic acid copolymer (dispersant) | 1 |
| Mowinyl 880 (acrylic/styrene copolymer resin emulsion having resin content on solid basis of 47%, manufactured by Hoechst Paper Co., Ltd.) | 6 |
| 2-Pyrrolidone | 3 |
| Maltitol | 7 |
| Urea | 10 |
| Ion-exchanged water | Balance |

### Evaluation tests

The inks prepared in Examples 1 to 8 and Comparative Examples 1 and 2 were evaluated as follows.

### Evaluation 1: ununiform printing

Solid printing (100% duty) was carried out with ink jet printer MJ-500, manufactured by Seiko Epson Corporation, using the ink composition on the following 10 papers. The OD value of a print portion of 1 mm was measured by means of Sakura Microdensitometer manufactured by Konica Corp. in a slit width of 200 x 20 µm. The difference between the maximum OD value and the minimum OD value was evaluated according to the following criteria. The results were as given in Table 1.

### -Paper for evaluation-

(1) Xerox P (Fuji Xerox Co,. Ltd.)
(2) Ricopy 6200 (Ricoh Co., Ltd.)
(3) EPP (Seiko Epson Corporation)
(4) Xerox R: recycled paper (Fuji Xerox Co., Ltd.)
(5) Yamayuri: recycled paper (Honshu Paper Co., Ltd.)
(6) Conqueror Laid: European paper
(7) Rapid Copy: European paper
(8) Mode Copy: European paper
(9) Neenah Bond: American paper
(10) Xerox 4024 3R 721: American paper

### -Evaluation criteria in Table I-

Difference between max. OD value and min. OD value is:
- less than 0.2 (no ununiform printing was observed)-(Ⓞ),
- not more than 0.5 (slight ununiform printing was observed)
- (○), and
- more than 0.5 (ununiform printing was observed)-(X).

### Evaluation 2: clogging

Printing was carried out using the ink compositions of the examples and comparative examples with ink jet printer MJ-500 to confirm that the ink could be successfully ejected through all the nozzles. Thereafter, the printing was stopped, and the printer was allowed to stand under an environment of room temperature and 40°C. One month after the initiation of standing, the printer was again placed in operation to observe the printing state. The results were evaluated as follows:
- ink could be successfully ejected through all the nozzles upon 0 to 2 times of cleaning -(Ⓞ),
- ink could be successfully ejected through all the nozzles upon 3 to 5 times of cleaning -(○), and
- ink could not be successfully ejected through all the nozzles even after 6 times or more cleaning-(X).

### Evaluation 3: Intermittent printing

Printing was carried at intervals of 5 sec with ink jet printer MJ-500 using the ink compositions of the examples and comparative examples under an environment of 15°C x 20% RH with an ink jet head being opened. The results were evaluated as follows:
- no deviation of the direction of ink droplets occurred in printing even for not less than 30 sec -(Ⓞ),
- no deviation of the direction of ink droplets occurred in printing for 20 sec to less than 30 sec-(○),
- no deviation of the direction of ink droplets occurred in printing for 10 sec to less than 20 sec-(△), and
- deviation of the direction of ink droplets occurred in printing for less than 10 sec -(X).

### Evaluation 4: Storage stability

The ink compositions of the examples and comparative examples were sealed into a glass bottle and allowed to stand at environmental temperatures of room temperature, -20°C, and 50°C. After 2 months, they were observed, under a microscope, on the degree of aggregation of the pigment particles. The results were evaluated as follows:
- neither aggregation nor solidification was observed at all the temperatures -(Ⓞ),
- aggregation was likely to occur only at -20°C or room temperature -(△), and
- aggregation and solidification occurred at all the temperatures -(X).

### Evaluation 5: quality of print

Letters were printed with ink jet printer MJ-500 using the ink compositions of the examples and comparative examples. The print was observed with the naked eye on the occurrence of bleeding and feathering. The results were evaluated as follows:
- neither bleeding nor feathering occurred with the image being sharp -(Ⓞ),
- bleeding and/or feathering somewhat occurred-(△), and
- bleeding and feathering were significantly observed-(X).

### Evaluation 6: print density

Printing was carried out using the ink compositions of the examples and comparative examples with ink jet printer MJ-500 on the 10 papers used in Evaluation 1. The OD value was measured at 10 points with a Macbeth densitometer in a slit width of 200 µm. The average value of the measurements was evaluated according to the following criteria:
- OD value of not less than 1.4 -(Ⓞ),
- OD value of 1.3 to less than 1.4 -(○), and
- OD value of less than 1.3 -(X).

### Evaluation 7: Ejecting stability

The ink compositions of the examples and comparative examples were continuously ejected with ink jet printer MJ-500 through the nozzles at room temperature, 5°C, and 40°C for 24 hr. The results were evaluated as follows:
- ink stably ejected without dropout -(Ⓞ),
- ink stably ejected at an early stage, but thereafter caused dropout -(△), and
- ink caused dropout even at an early stage -(X).

**Table 1**

| Ink | Evaluation 1 | Evaluation 2 | Evaluation 3 | Evaluation 4 | Evaluation 5 | Evaluation 6 | Evaluation 7 |
|---|---|---|---|---|---|---|---|
| Ex.1 | Ⓞ | Ⓞ | Ⓞ | Ⓞ | Ⓞ | Ⓞ | Ⓞ |
| Ex.2 | Ⓞ | Ⓞ | Ⓞ | Ⓞ | Ⓞ | Ⓞ | Ⓞ |
| Ex.3 | Ⓞ | Ⓞ | Ⓞ | Ⓞ | Ⓞ | Ⓞ | Ⓞ |
| Ex.4 | ○ | Ⓞ | Ⓞ | Ⓞ | Ⓞ | ○ | Ⓞ |
| Ex.5 | Ⓞ | ○ | Ⓞ | Ⓞ | Ⓞ | Ⓞ | Ⓞ |
| Ex.6 | Ⓞ | Ⓞ | Ⓞ | Ⓞ | Ⓞ | Ⓞ | Ⓞ |
| Ex.7 | Ⓞ | Ⓞ | Ⓞ | Ⓞ | Ⓞ | Ⓞ | Ⓞ |
| Ex.8 | Ⓞ | Ⓞ | Ⓞ | Ⓞ | Ⓞ | Ⓞ | Ⓞ |
| Comp. Ex.1 | X | X | △ | △ | △ | X | △ |
| Comp. Ex.2 | X | X | X | X | Ⓞ | ○ | X |

## Claims

1. An ink composition for ink jet recording, comprising a pigment, a dispersant, an aqueous medium, 2-pyrrolidone, and a resin emulsion soluble in the 2-pyrrolidone.

2. The ink composition according to claim 1, wherein the 2-pyrrolidone : resin emulsion ratio is 1 : 0.1 to 1 : 3.

3. The ink composition according to claim 1, wherein the 2-pyrrolidone : resin emulsion ratio is 1 : 0.3 to 1 : 1.5.

4. The ink composition according to claim 1, wherein the resin emulsion is selected from an acrylic resin emulsion, a vinyl acetate resin emulsion, a vinyl chloride resin emulsion, an acrylic/styrene resin emulsion, a butadiene resin emulsion, and a styrene resin emulsion.
